# EUROPÄISCHE PATENTSCHRIFT

(11) **EP 1 870 863 B1**
(45) Veröffentlichungstag und Bekanntmachung des Hinweises auf die Patenterteilung: **24.12.2008**
(21) Anmeldenummer: 06012719.8
(22) Anmeldetag: 21.06.2006
(51) Int. Cl.: G08B 13/19

(54) **Bewegungsmelder mit integrierter Alarmvorrichtung**
Movement detector with integrated alarm device
Détecteur de mouvement avec dispositif d'alarme intégré

(43) Veröffentlichungstag der Anmeldung: 26.12.2007
(73) Patentinhaber: ABB AG, 68309 Mannheim (DE)
(72) Erfinder: Fröchte, Bernd, Dr.-Ing., 45663 Recklinghausen (DE)
(74) Vertreter: Miller, Toivo

(56) Entgegenhaltungen:
- EP-A- 1 398 742
- WO-A-03/098569
- US-A- 4 612 442

## Beschreibung

Die Erfindung bezieht sich auf einen Bewegungsmelder mit integrierter Alarmvorrichtung gemäß dem Oberbegriff des Anspruchs 1. Die Erfindung kann bei einem innerhalb / außerhalb eines Gebäudes zu montierendem Bewegungsmelder verwendet werden.

Aus der WO 03/098569A1 ist eine an Stelle einer elektrischen Lampe installierbare Sensor-Alarm-Beleuchtung inklusive Anzeigeelement, pyroelektrischem Sensor, elektrischer Lampe und Tonerzeuger (Summer) bekannt, wobei das Anzeigeelement durch Aufflackern einen Alarmbetrieb einleitet und hierdurch anzeigt, dass die Alarmfunktion in Betrieb gesetzt ist.

Aus der EP 1 398 742 A ist ein Passiv-Infrarot-Bewegungsmelder mit einem ersten optischen System zur Erfassung einer Personenbewegung in einem Fernbereich und einem zweiten optischen System zur Erfassung einer Personenbewegung in einem Nahbereich bekannt, wobei ein erster Schaltausgang zur Steuerung einer Beleuchtungseinrichtung vorgesehen ist und ein zweiter Schaltausgang für Alarme genutzt werden kann und dazu mit einem optischen oder akustischen Signalgeber verbunden wird.

Aus der US 4 612 442 A ist ein passives Infrarot-Einbruchsdetektion-System bekannt, bei welchem ein Zähler die Anzahl detektierter Bewegungen pro Zeiteinheit erfasst, damit ein Alarmsignal nur dann erzeugt wird, wenn ein vorgebbarer Wert überschritten ist.

Aus der DE 10 2004 012 605 A1 ist eine Innenleuchte mit Innenraumüberwachungsvorrichtung für Fahrzeuge bekannt, welche mindestens ein über eine Betätigungseinrichtung mit der Stromversorgung des Fahrzeugs verbindbares Leuchtmittel zum Beleuchten des Fahrzeuginnenraums und wenigstens einen IR-Bewegungsmelder zum Überwachen des Fahrzeuginnenraums aufweist. Der IR-Bewegungsmelder hat einen mit einem Alarmgeber verbundenen Alarmsignalausgang und einen mit einer Verriegelungseinrichtung für den Fahrzeuginnenraum verbundenen Steuersignaleingang, über den die Innenraumüberwachungsvorrichtung zwischen einem Überwachungszustand, in dem die Ausgabe eines Alarmsignals an den Alarmsignalausgang freigegeben ist, und einem Ruhezustand, in dem die Ausgabe des Alarmsignals gesperrt ist, umschaltbar ist. Die Innenraumüberwachungsvorrichtung steht zumindest im Ruhezustand mit der Betätigungseinrichtung für das Leuchtmittel in Steuerverbindung. Im Ruhezustand ist die Detektionsreichweite des IR-Bewegungsmelders im Vergleich zum Überwachungszustand derart reduziert, dass der IR-Bewegungsmelder zum berührungslosen optischen Betätigen des Leuchtmittels nutzbar ist.

In der DE 10 2006 018 012 wird ein Bewegungsmelder zur Montage innerhalb / außerhalb eines Gebäudes vorgeschlagen, mit integrierter, bedarfsweise mittels einer Ansteuerschaltung aktivierbarer Alarmeinrichtung und mit einer vom Bewegungsmelder anzusteuernden Beleuchtung. Der Bewegungsmelder ist mittels eines Umschalters in zwei unterschiedliche Betriebarten einstellbar, nämlich in eine erste Betriebsart, bei welcher der Bewegungsmelder zur Ansteuerung der angeschlossenen Beleuchtung aktiviert ist und bei welcher eine hohe Erfassungsempfindlichkeit und eine hohe Erfassungsreichweite eingestellt werden, und eine zweite Betriebsart, bei welcher der Bewegungsmelder für Alarmzwecke "scharfgeschaltet" ist, um bedarfsweise eine Alarmeinrichtung zu aktivieren und ein Alarmsignal abzugeben, und bei welcher eine niedrige Erfassungsempfindlichkeit und eine niedrige Erfassungsreichweite eingestellt werden.

Stand der Technik bei Bewegungsmeldern mit integrierter Alarmvorrichtung zur Montage innerhalb oder außerhalb eines Gebäudes sind Unterputz- oder Aufputz-Bewegungsmelder in Passiv-Infrarot- oder Radartechnik. Neben der üblichen Hauptaufgabe eines Bewegungsmelders, nämlich dem automatischen und bewegungsabhängigen Einschalten einer Beleuchtung, gibt es auch Bewegungsmelder mit einer integrierten Alarmvorrichtung und Bewegungsmelder für den Anschluss an separate Alarmanlagen. Nachteile dieses Standes der Technik resultieren aus der Tatsache, dass je nach Anwendungsfall ein Bewegungsmelder mit unterschiedlichen Eigenschaften einzusetzen ist:
A) Bewegungsmelder für Beleuchtungszwecke:
   - hohe Erfassungsempfindlichkeit,
   - hohe Erfassungsreichweite,
   - Gerät mit Stromnetzanschluss für Unterputz- oder Aufputz-Montage,
   - Fehltrigger sind wegen der hohen Empfindlichkeit möglich.
B) Bewegungsmelder für Alarmzwecke:
   - geringere Erfassungsempfindlichkeit
   - geringere Erfassungsreichweite
   - Gerät mit Stromnetzanschluss und/oder Batterieversorgung / -pufferung, eher Aufputz- oder "stand-alone"-Bauform üblich,
   - Wahrscheinlichkeit für Fehltrigger ist sehr gering.

Der Erfindung liegt die Aufgabe zugrunde, einen Bewegungsmelder mit integrierter Alarmvorrichtung anzugeben, welche durch abschreckende Maßnahmen einen Einbruch verhindern hilft.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, dass durch abschreckende Maßnahmen ein Einbruch bereits im Vorfeld verhindert wird. Der scharf geschaltete Ruhezustand wird nach außen hin sichtbar gemacht, um einem Eindringling im Vorfeld das Risiko anzuzeigen und ihn abzuschrecken und somit den Einbruch präventiv zu verhindern. In der einfachsten Ausführungsform ohne externe Alarmvorrichtung wird eine sehr kostengünstige "Mini-Alarmanlage" geschaffen, deren Bedienung denkbar einfach ist, da eine "Scharfschaltung" eines einzigen Bewegungsmelders beim Verlassen des Gebäudes ausreicht. Mit geringem Mehraufwand kann auch ein Alarmsystem mit zwei, drei oder mehr Bewegungsmeldern geschaffen werden.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Grundausführung eines Bewegungsmelders mit integrierter Alarmeinrichtung,
- Fig. 2: die Alarmeinrichtung bei Einstellung der Betriebsart A,
- Fig. 3: die Alarmeinrichtung bei Einstellung der Betriebsart B,
- Fig. 4: die Alarmeinrichtung bei Einstellung der Betriebsart C.

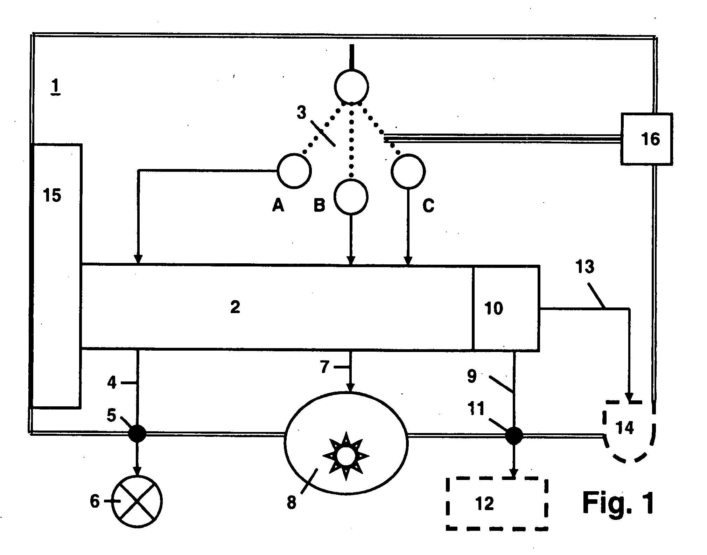

In Fig. 1 ist eine Grundausführung eines Bewegungsmelders mit integrierter Alarmeinrichtung dargestellt. Es ist ein (vorzugsweise Unterputz-) Bewegungsmelder 1 mit Elektronik 2 (inklusive Sensorsignalaufbereitung und nicht dargestellter Bedienelemente) gezeigt, welcher mittels eines Umschalters 3 in mindestens drei unterschiedliche Betriebsarten A, B, C einstellbar ist. Die gewünschte Betriebsart ist dabei mittels einer manuellen Betätigungseinrichtung 16 vom Anwender einstellbar. Die zu detektierenden Bewegungen werden mittels einer Infrarotsensorik /Infrarotoptik 15 erfasst. Die Elektronik 2 des Bewegungsmelders 1 steuert über eine Ansteuerleitung 4 ggf. einen Ausgang 5 des Bewegungsmelders an, an welchen eine externe Beleuchtung 6 angeschlossen ist. Über eine weitere Ansteuerleitung 7 der Elektronik 2 wird ggf. zumindest eine, vorzugsweise rote, im Bewegungsmelder 1 integrierte Leuchtdiode 8 beaufschlagt. Ein mit der Elektronik 2 verbundener Zähler 10 beaufschlagt je nach vorgegebener Betriebsart entweder über eine Ansteuerleitung 9 einen Ausgang 11 des Bewegungsmelders 1 oder über eine Ansteuerleitung 13 einen Signaltonerzeuger 14. An den Ausgang 11 ist (optional) eine externe Alarmvorrichtung 12 anschließbar. Der (optionale) Signaltonerzeuger 14 ist im Bewegungsmelder 1 integriert.

Je nach mittels Betätigungseinrichtung 16 eingestellter Schaltstellung des Umschalters 3 wird vom Anwender eine der folgenden Betriebsarten A, B oder C vorgegeben:

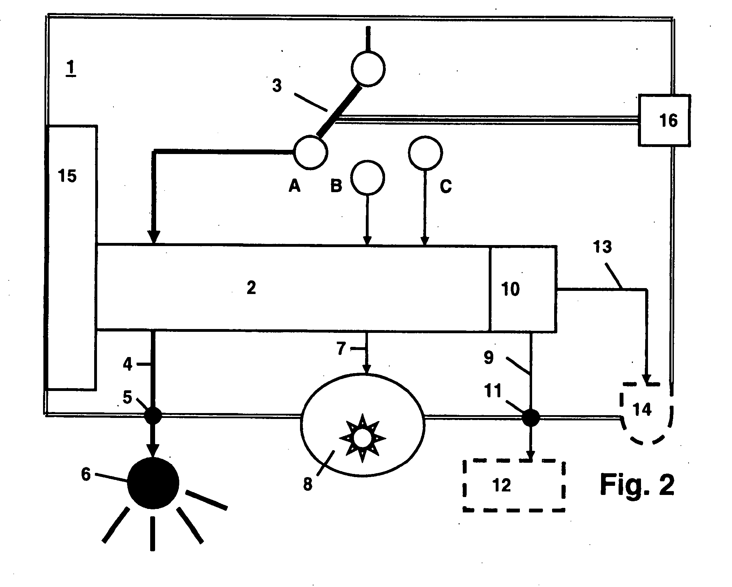

Erste Betriebsart A "unscharf", siehe hierzu Fig. 2:
- durch den Umschalter 3 ist Schaltstellung A eingestellt,
- Bewegungsmelder 1 ist zur Ansteuerung der Beleuchtung 6 aktiviert,
- es wird eine hohe Erfassungsempfindlichkeit eingestellt,
- es wird eine hohe Erfassungsreichweite eingestellt,
- Fehltrigger (Fehlauslösungen) sind möglich, können jedoch toleriert werden,
- bei IR-Detektion einer Bewegung beaufschlagt der Bewegungsmelder 1 eine am Ausgang 5 angeschlossene Beleuchtung 6.

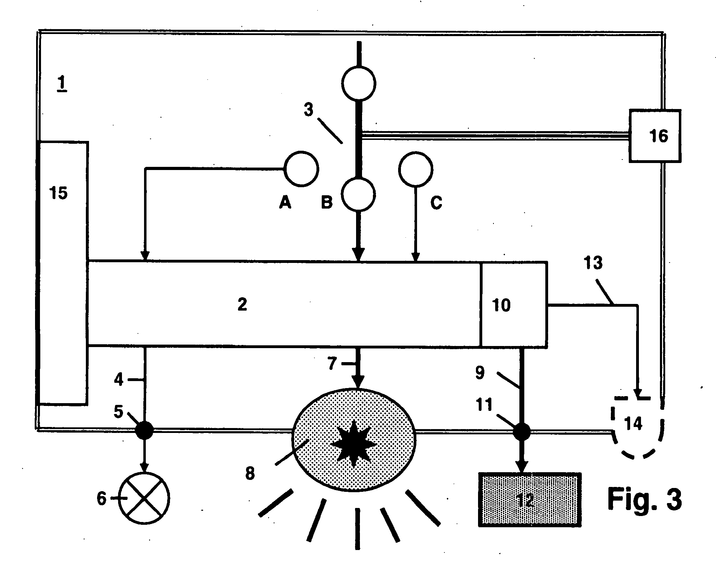

Zweite Betriebsart B "scharf", siehe hierzu Fig. 3:
- durch den Umschalter 3 ist Schaltstellung B eingestellt
- Bewegungsmelder 1 ist im Überwachungsstatus für Alarmzwecke aktiviert ("Alarmmodus", "Scharfschaltung"),
- es wird eine geringe Erfassungsempfindlichkeit eingestellt,
- es wird eine geringe Erfassungsreichweite eingestellt,
- die Wahrscheinlichkeit für Fehltrigger ist sehr gering,
- es wird eine Präventivfunktion eingestellt, d. h. die Leuchtdiode 8 blinkt mit sehr kurzer Einschaltzeit und mit großer Helligkeit; durch eine optionale Optik wird das erzeugte Licht gebündelt als Punkt oder als Linie an eine dem Bewegungsmelder 1 gegenüberliegende Wand gestrahlt; die Reflektion des erzeugten Lichts erzeugt im Raum einen kurzen Lichtblitz, was nach außen signalisiert "Finger weg, scharf geschaltet",
- über den Zähler 10 wird die Anzahl detektierter Bewegungen pro Zeiteinheit erfasst; erst wenn die vorgegebene Anzahl detektierter Bewegungen pro Zeiteinheit überschritten wird, erfolgt eine Beaufschlagung des Ausgangs 11 mit Ansteuerung der angeschlossenen Alarmanlage 12; dies vermindert mögliche Fehlauslösungen sehr. So kann verhindert werden, dass z. B. ein von einer Blume herunterfallendes Blatt vor einem warmen Heizkörper zu einer Fehlauslösung führt.

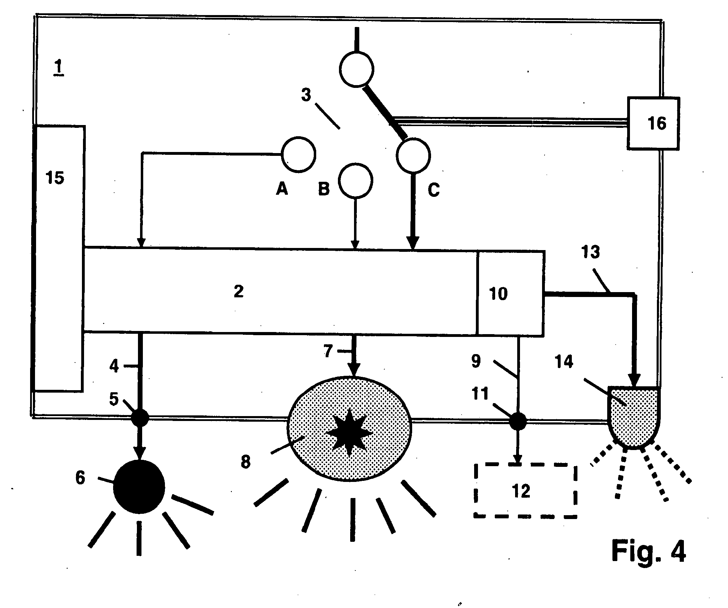

Dritte Betriebsart C "Alarmfunktion aktiviert", siehe hierzu Fig. 4:
- durch den Umschalter 3 ist Schaltstellung C eingestellt,
- Bewegungsmelder 1 ist im Überwachungsstatus für Alarmfunktion aktiviert,
- es wird eine geringe Erfassungsempfindlichkeit eingestellt,
- es wird eine geringe Erfassungsreichweite eingestellt,
- die Wahrscheinlichkeit für Fehltrigger ist sehr gering,
- es wird eine Präventivfunktion eingestellt, d. h. die Leuchtdiode 8 blinkt mit sehr kurzer Einschaltzeit und mit großer Helligkeit; durch eine optionale Optik wird das erzeugte Licht gebündelt als Punkt oder als Linie an eine dem Bewegungsmelder 1 gegenüberliegende Wand gestrahlt, die Reflektion des erzeugten Lichts erzeugt im Raum einen kurzen Lichtblitz, was nach außen signalisiert "Finger weg, scharf geschaltet",
- über den Zähler 10 wird die Anzahl detektierter Bewegungen pro Zeiteinheit erfasst; erst wenn die vorgegebene Anzahl detektierter Bewegungen pro Zeiteinheit überschritten wird, erfolgt eine Beaufschlagung des Ausgangs 5, wodurch die externe Beleuchtung 6 blinkt, d. h. mit vorgegebener Frequenz zyklisch ein-und ausgeschaltet wird und/oder es erfolgt eine Beaufschlagung des Signaltonerzeugers 14.

Wie aus den vorstehenden Erläuterungen hervorgeht, erfordert die kombinierte Verwendung des Bewegungsmelders für Beleuchtungszwecke und für Alarmzwecke eine Anpassung der Geräteparameter an die unterschiedlichen Aufgabenstellungen. Wichtig ist es, bei Aktivierung des Bewegungsmelders für Alarmzwecke die Anzahl der für das Auslösen der Schaltfunktion erforderlichen Trigger pro Zeitintervall zu erhöhen. Dies ist erforderlich, um im "Alarmmodus" Fehlfunktionen und eine unbeabsichtigte Alarmauslösung mit hoher Sicherheit zu vermeiden.

In Übereinstimmung mit der DE 10 2006 018 012 kann darüber hinaus in Betriebsart C
- ein Alarmsystem mit mindestens zwei Bewegungsmeldern geschaffen werden,
   ■ wobei der erste Bewegungsmelder 1 wie vorstehend erläutert ausgebildet ist,
   ■ wobei der mindestens eine weitere Bewegungsmelder einen Helligkeitssensor mit nachgeschalteter Auswerteeinheit und/oder ein Mikrofon mit nachgeschalteter Auswerteeinheit aufweist,
   ■ wobei die Auswerteeinheit des weiteren Bewegungsmelders ein vom ersten Bewegungsmelder 1 abgegebenes Alarmsignal detektiert,
   ■ und wobei der mindestens eine weitere Bewegungsmelder nach Detektion eines Alarmsignals des ersten Bewegungsmelders 1 ebenfalls ein Alarmsignal abgibt,
- der mindestens eine weitere Bewegungsmelder zur Abgabe eines Alarmsignals die ihm zugeordnete Beleuchtung mit vorgegebener Frequenz zyklisch ein- und ausschalten,
- der mindestens eine weitere Bewegungsmelder zur Abgabe eines Alarmsignals einen integrierten Signaltonerzeuger ansteuern,
- außer dem ersten Bewegungsmelder 1 mindestens zwei weitere Bewegungsmelder vorgesehen sein, wobei eine Weiterleitung des Alarms vom ersten Bewegungsmelder 1 zum zweiten Bewegungsmelder und von diesem zum dritten Bewegungsmelder in Form einer "Kettenreaktion" erfolgt.

### Bezugszeichenliste:

- 1: Bewegungsmelder
- 2: Elektronik
- 3: Umschalter mit drei Schaltstellungen A, B, C
- 4: Ansteuerleitung
- 5: Ausgang
- 6: externe Beleuchtung
- 7: Ansteuerleitung
- 8: integrierte Leuchtdiode
- 9: Ansteuerleitung
- 10: Zähler
- 11: Ausgang
- 12: externe Alarmvorrichtung
- 13: Ansteuerleitung
- 14: integrierter Signaltonerzeuger
- 15: Infrarosensorik /Infrarotoptik
- 16: manuelle Betätigungseinrichtung für Umschalter

- A: erste Betriebsart (erste Schaltstellung)
- B: zweite Betriebsart (zweite Schaltstellung)
- C: dritte Betriebsart (dritte Schaltstellung)

## Patentansprüche

1. Bewegungsmelder (1) mit integrierter Alarmvorrichtung, welcher einen Ausgang (5) zur Ansteuerung einer externen Beleuchtung (6) aufweist und mittels eines Umschalters (3) in unterschiedliche Betriebsarten einstellbar ist, wobei der Bewegungsmelder in einer ersten Betriebsart (A) zur Ansteuerung der angeschlossenen externen Beleuchtung (6) aktiviert ist und in einer weiteren Betriebsart für Alarmzwecke "scharfgeschaltet" ist, wobei bei "scharfgeschaltetem" Bewegungsmelder (1) mindestens eine im Bewegungsmelder (1) integrierte, vorzugsweise rote Leuchtdiode (8), blinkt, **dadurch gekennzeichnet, dass** eine Optik das von der mindestens einen Leuchtdiode (8) erzeugte Licht zu einem Punkt oder zu einer Linie bündelt.

2. Bewegungsmelder nach Anspruch 1, **dadurch gekennzeichnet, dass** unter Verwendung eines Zählers (10) eine externe Alarmanlage (12) beaufschlagt wird, wenn eine vorgegebene Anzahl detektierter Bewegungen pro Zeiteinheit überschritten wird.

3. Bewegungsmelder nach Anspruch 1, **dadurch gekennzeichnet, dass** unter Verwendung eines Zählers (10) eine externe Beleuchtung (6) mit zyklischer Frequenz beaufschlagt wird, wenn eine vorgegebene Anzahl detektierter Bewegungen pro Zeiteinheit überschritten wird.

4. Bewegungsmelder nach einem der vorstehenden Ansprüche, **dadurch gekennzeichnet, dass** ein im Bewegungsmelder (1) integrierter Signaltonerzeuger (14) beaufschlagt wird, wenn eine vorgegebene Anzahl detektierter Bewegungen pro Zeiteinheit überschritten wird.

## Claims

1. A motion detector (1), comprising an integrated alarm apparatus which comprises an output (5) for triggering an external light (6) and can be set to different operating modes by means of a changeover switch (3), with the motion detector being activated in a first operating mode (A) for triggering the connected external light (6) and armed in a further operating mode for alarm purposes, with at least one light-emitting diode (8), which is preferably in red and integrated in the motion detector (1), blinking in the case of armed motion detector (1), **characterized in that** a lens system focuses the light which is generated by the at least one light-emitting diode (8) into a dot or a line.

2. A motion detector according to claim 1, **characterized in that** an external alarm system (12) is activated by using a counter (10) when a predetermined number of detected movements per unit of time is exceeded.

3. A motion detector according to claim 1, **characterized in that** an external light (6) is activated with cyclic frequency by using a counter (10) when a predetermined number of detected movements per unit of time is exceeded.

4. A motion detector according to one of the preceding claims, **characterized in that** a signal-sound generator (14) integrated in the motion detector (1) is activated when a predetermined number of detected movements per unit of time is exceeded.

## Revendications

1. Détecteur de mouvement (1) avec dispositif d'alarme intégré, qui présente une sortie (5) pour l'activation d'un éclairage externe (6) et qui peut être réglé au moyen d'un commutateur (3) dans différents modes de fonctionnement, lequel détecteur de mouvement est activé dans un premier mode de fonctionnement (A) pour activer l'éclairage externe (6) connecté et « mis en alerte » dans un autre mode de fonctionnement aux fins de l'alarme, dans lequel au moins une diode électroluminescente (8) intégrée dans le détecteur de mouvement (1) et de préférence rouge clignote quand le détecteur de mouvement (1) est « mis en alerte », **caractérisé en ce qu'**une optique focalise la lumière produite par l'au moins une diode électroluminescente (8) en un point ou une ligne.

2. Détecteur de mouvement selon la revendication 1, **caractérisé en ce qu'**une installation d'alarme externe (12) est sollicitée en utilisant un compteur (10) quand un nombre prédéterminé de mouvements détectés par unité de temps est dépassé.

3. Détecteur de mouvement selon la revendication 1, **caractérisé en ce qu'**un éclairage externe (6) est sollicité à une fréquence cyclique en utilisant un compteur (10) quand un nombre prédéterminé de mouvements détectés par unité de temps est dépassé.

4. Détecteur de mouvement selon l'une des revendications précédentes, **caractérisé en ce qu'**un générateur de signaux sonores (14) intégré dans le détecteur de mouvement (1) est sollicité quand un nombre prédéterminé de mouvements détectés par unité de temps est dépassé.
